# EUROPEAN PATENT APPLICATION

(11) **EP 4 790 795 A1**
(43) Date of publication of application: **12.08.2026**
(21) Application number: 25861735.6
(22) Date of filing: 17.03.2025
(51) Int. Cl.: H01M 10/613, H01M 10/6568, H01M 10/6554

(54) **BATTERY MODULE AND BATTERY PACK**

(30) Priority: 20.12.2024 CN 202411898143
(71) Applicant: Eve Energy Co., Ltd., Huizhou, Guangdong 516006 (CN)
(72) Inventor: TANG, Jing, Huizhou, Guangdong 516006 (CN); WANG, Yuanyuan, Huizhou, Guangdong 516006 (CN); HUANG, Liansheng, Huizhou, Guangdong 516006 (CN); ZHOU, Xiao, Huizhou, Guangdong 516006 (CN)
(74) Representative: Berggren Oy
(86) International application number: PCT/CN2025/082973
(87) International publication number: WO 2026/129501

(57) **Abstract**

The present application relates to a battery module and a battery pack. The battery module includes: multiple battery cell groups spaced apart along a first direction; multiple cooling plates spaced apart along the first direction, with a cooling plate arranged between two adjacent battery cell groups; and multiple connection terminals located at one end of the cooling plates, the connection terminals corresponding one-to-one with the cooling plates. Adjacent cooling plates are interconnected via the connection terminals, and the connection terminal on the cooling plate furthest from the downstream end is provided with a shunt port for discharging coolant from the cooling plate.

## Description

This application claims the priority of Chinese Patent Application No. 202411898143.9 filed with the China Patent Office on December 20, 2024, the entire contents of these applications are incorporated herein by reference.

### TECHNICAL FIELD

The present application relates to the technical field of battery modules, and in particular, to a battery module and a battery pack.

### DESCRIPTION OF RELATED ART

In related technologies, cylindrical batteries are characterized by high energy density and high power, making them one of the mainstream choices for battery packs at present. Compared to traditional prismatic batteries, cylindrical batteries primarily adopt a cooling method in which the side surface of a liquid cooling plate is in contact with the battery cells.

### SUMMARY OF INVENTION

However, in the side cooling method, when the coolant flows from the main channel toward the downstream end, it continues its inertial movement. As a result, the coolant flow rate in the liquid cooling plates near the downstream end is higher than that in the cooling plates near the upstream end. This leads to uneven coolant distribution among the branches and causes excessive temperature differences among the battery cells.

Therefore, there is an urgent need to design a battery module and a battery pack to address these technical issues.

In a first aspect, the present application provides a battery module, including: a plurality of battery cell groups spaced apart along a first direction; a plurality of cooling plates spaced apart along the first direction, each cooling plate disposed between two adjacent battery cell groups; a plurality of connection terminals disposed at one end of the cooling plates, the connection terminals corresponding one-to-one with the cooling plates, wherein adjacent cooling plates are interconnected via the connection terminals, and the connection terminal on the cooling plate furthest from a downstream end is provided with a shunt port for discharging coolant from the cooling plate.

In a second aspect, the present application further provides a battery pack including the above-described battery module.

### BENEFICIAL EFFECTS

In the battery module provided by the present application, the connection terminal on the cooling plate near the middle position is provided with a shunt port. This configuration allows a portion of the coolant to be diverted to the outside when flowing from the connection terminal on the cooling plate near the upstream end to the shunt port, thereby reducing the coolant flow rate in the liquid cooling plates near the downstream end. This ensures that the coolant flow rate in the cooling plates near the downstream end matches that in the cooling plates near the upstream end, achieving uniform coolant flow distribution among the branches and avoiding excessive temperature differences among the battery cells.

The battery pack provided by the present application uses the above-described battery module, which is conducive to maintaining stable operation of the battery pack.

### BRIEF DESCRIPTION OF DRAWINGS

FIG. 1 is a perspective schematic view of a battery module provided by an embodiment;
FIG. 2 is a front schematic view of a connection terminal provided by an embodiment;
FIG. 3 is a side schematic view of the connection terminal provided by an embodiment;
FIG. 4 is a rear schematic view of the connection terminal provided by an embodiment;
FIG. 5 is a perspective schematic view of the connection terminal provided by an embodiment;
FIG. 6 is a cross-sectional schematic view of the connection terminal provided by an embodiment;
FIG. 7 is a pressure schematic diagram of a liquid cooling plate of a battery module provided by an embodiment (for a color diagram, refer to Chinese Patent Application No. 202411898143.9);
FIG. 8 is a schematic diagram of the flow distribution ratio of different liquid cooling plates of a battery module provided by an embodiment.

The above drawings include the following reference numerals:
battery cell group 10, cooling plate 20, connection terminal 30, shunt port 31, first flow port 32, second flow port 33, connection groove 34, partition structure 35, first direction X, second direction Y.

### DETAILED DESCRIPTION OF EMBODIMENTS

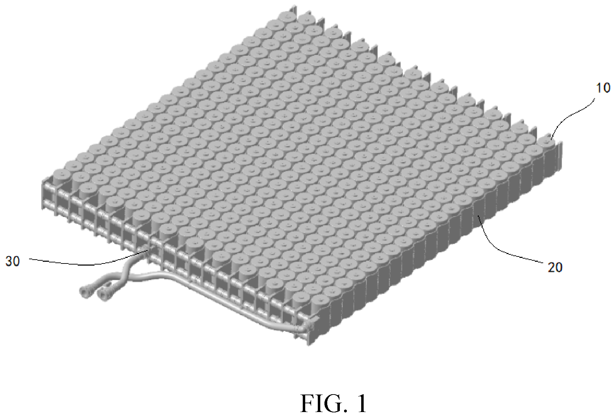

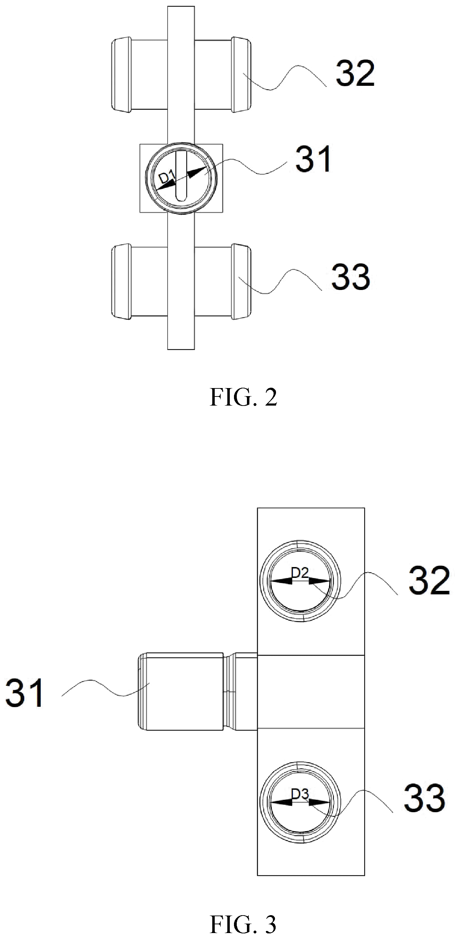

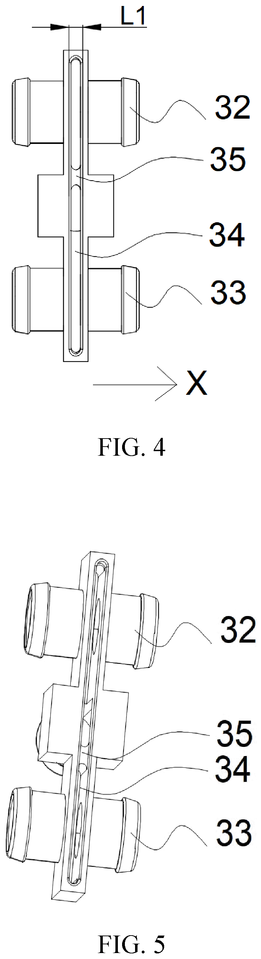

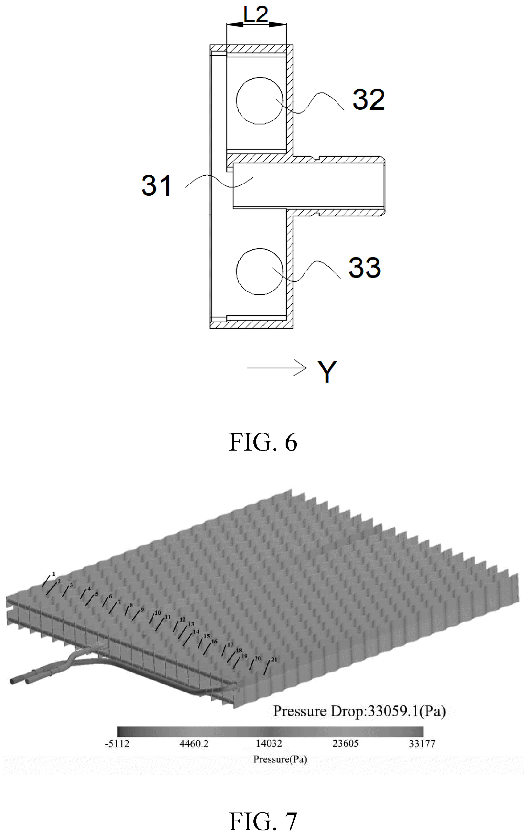

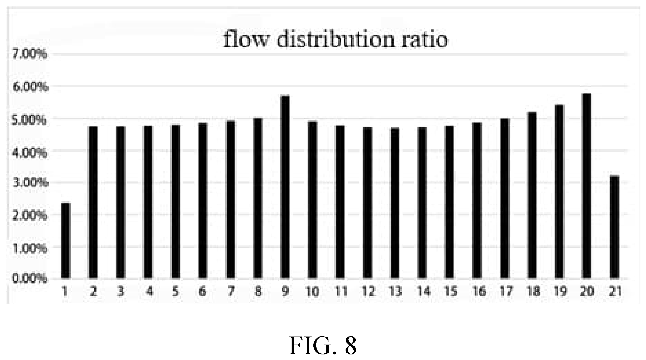

As shown in FIGS. 1 to 8, in a first aspect, an embodiment of the present application provides a battery module including a plurality of battery cell groups 10 spaced apart along a first direction; a plurality of cooling plates 20 spaced apart along the first direction, with a cooling plate 20 disposed between two adjacent battery cell groups 10; and a plurality of connection terminals 30 disposed at one end of the cooling plates 20, the connection terminals 30 corresponding one-to-one with the cooling plates 20. Adjacent cooling plates 20 are interconnected via the connection terminals 30, and the connection terminal 30 on the cooling plate 20 furthest from the downstream end is provided with a shunt port 31 for discharging coolant from the cooling plate 20.

By applying the technical solution of the present application, the connection terminal 30 on the cooling plate 20 near the middle position is provided with a shunt port 31. This configuration allows a portion of the coolant to be diverted to the outside when flowing from the connection terminal 30 on the cooling plate 20 near the upstream end to the shunt port 31, thereby reducing the coolant flow rate in the cooling plates 20 near the downstream end. This ensures that the coolant flow rate in the cooling plates near the downstream end matches that in the cooling plates near the upstream end, achieving uniform coolant flow distribution among the branches and avoiding excessive temperature differences among the battery cells.

In the present application, the battery cell group 10 includes a plurality of cylindrical batteries, and the cooling plate 20 is S-shaped. The S-shaped cooling plate 20 increases the contact area between the coolant and the heat dissipation fins, thereby improving heat dissipation efficiency. This design facilitates rapid transfer of heat generated by the battery cell group 10 to the cooling plate 20, with the heat being carried away by the circulating coolant, maintaining stable temperatures for the battery cell group 10.

Additionally, the S-shaped cooling plate 20 optimizes space utilization, making the overall structure of the battery cell group 10 more compact. This helps save internal space in the device, improving space efficiency. Compared to other shapes of cooling plates 20, the S-shaped cooling plate 20 may produce less noise during coolant flow, enhancing the device's quiet performance and providing a more comfortable user experience. The combination of cylindrical batteries and S-shaped cooling plates 20 significantly improves the heat dissipation efficiency of the battery module. The coolant fully contacts the battery surface through the S-shaped cooling plate 20, quickly dissipating the heat generated by the batteries, ensuring operation within the optimal temperature range. An efficient heat dissipation system also maintains temperature consistency within the battery module, reducing the impact of temperature fluctuations on battery performance, thereby extending battery lifespan and improving reliability and stability.

Furthermore, the cooling plate 20 is typically made of materials with high thermal conductivity and other excellent physical properties, such as aluminum or copper. Using aluminum as the material for the cooling plate 20 offers several significant advantages. Due to its excellent thermal conductivity, aluminum can quickly transfer heat from the heat source to the surface of the cooling plate 20, where it is dissipated into the air through cooling fans or natural convection. This efficient thermal conductivity allows the aluminum cooling plate 20 to effectively dissipate heat in a short time, maintaining stable device operation.

Additionally, aluminum has a low density, enabling a lightweight design while ensuring heat dissipation performance. Lightweight design reduces the overall weight of the device, improving energy efficiency and portability, which is particularly important for devices requiring mobility or frequent repositioning. Moreover, aluminum exhibits good corrosion resistance in natural environments, resisting erosion from various chemical substances. This ensures that the aluminum cooling plate 20 is less prone to corrosion or oxidation during use, thereby extending its lifespan. Surface treatment processes (e.g., anodizing, coating) can further enhance its corrosion resistance.

Aluminum also has excellent processability, allowing it to be formed into various shapes and sizes of cooling plates 20 through processes such as casting, forging, extrusion, or stretching. This enables aluminum cooling plates 20 to meet the heat dissipation needs of different devices and application scenarios. In addition, aluminum exhibits favorable cold-working properties, which allow its strength and hardness to be improved through cold processing without compromising thermal conductivity. Compared to other metals such as copper, aluminum is relatively inexpensive, providing advantages in cost control while still offering excellent heat dissipation performance, thereby delivering high cost-effectiveness. Furthermore, aluminum is a recyclable metal that complies with environmental requirements, helping to reduce resource consumption and environmental pollution, and supporting sustainable development.

Optionally, copper, a metal with excellent thermal conductivity, has a thermal conductivity coefficient significantly higher than that of many other common metals, such as aluminum or iron. This enables copper to transfer heat from a heat source (e.g., batteries or internal electronic components) to the surface of the cooling plate 20 more rapidly and efficiently, where the heat is then dissipated through cooling fans or liquid cooling systems. This superior thermal conductivity allows the copper cooling plate 20 to maintain excellent heat dissipation performance under high-load and high-temperature conditions, thereby ensuring stable operation of the device. Copper also offers good processability, allowing it to be formed into various shapes and sizes of cooling plates 20 through casting, forging, extrusion, or stretching, to meet the heat dissipation needs of different devices and application scenarios.

Additionally, copper's cold-working properties allow for increased strength and hardness without compromising thermal conductivity. Copper also exhibits good corrosion resistance in natural environments, resisting erosion from various chemical substances, ensuring that the copper cooling plate 20 is less prone to corrosion or oxidation during use, thereby extending its lifespan. Surface treatments (e.g., nickel or chrome plating) can further enhance its corrosion resistance.

Furthermore, copper has high mechanical strength, capable of withstanding significant pressure and tension. This ensures that the copper cooling plate 20 is resistant to deformation or damage during installation and use, guaranteeing the stability and reliability of the heat dissipation system.

The high mechanical strength also allows the copper cooling plate 20 to better withstand vibrations and impacts from within the device, enhancing the durability of the entire heat dissipation system. Copper's excellent ductility and plasticity allow it to be easily formed into various shapes and sizes of heat dissipation fins, channels, or other structures, enabling the copper cooling plate 20 to flexibly adapt to the heat dissipation needs of different devices, improving overall system performance. In summary, copper as a material for the cooling plate 20 offers superior thermal conductivity, good processability, excellent corrosion resistance, high mechanical strength, and good ductility and plasticity.

In one embodiment, the connection terminal 30 further includes a first flow port 32 and a second flow port 33, wherein the first flow ports 32 of adjacent connection terminals 30 are interconnected, and the second flow ports 33 of adjacent connection terminals 30 are interconnected. The shunt port 31 is in communication with the first flow port 32, while the second flow port 33 is isolated from both the first flow port 32 and the shunt port 31. This configuration allows fluid to flow smoothly between adjacent connection terminals 30, preventing fluid accumulation or clogging within a single connection terminal 30, thereby improving fluid flow efficiency. Since the first flow ports 32 are interconnected, the fluid experiences lower resistance during flow, reducing pressure loss and enabling more efficient fluid delivery to the target area. The communication between the shunt port 31 and the first flow port 32 allows for flexible fluid distribution based on actual needs. Additionally, the isolation of the second flow port 33 from the first flow port 32 and the shunt port 31 provides an additional fluid channel option, enhancing system flexibility.

This design enables the connection terminal 30 to be suitable for various fluid transmission scenarios, meeting the requirements for fluid transmission efficiency, stability, and flexibility in different applications. The isolation of the second flow port 33 from the first flow port 32 and the shunt port 31 reduces the risk of fluid leakage, ensuring high sealing performance during system operation and preventing system failure or performance degradation due to leaks. Additionally, smooth fluid flow between adjacent connection terminals 30 enhances system stability, reducing issues such as system vibration or noise caused by poor fluid flow, thereby improving overall system performance. Furthermore, the design of the connection terminal 30 simplifies the installation process. Standardized interfaces and connection methods allow for quick installation and commissioning of the connection terminal 30. The well-designed flow port configuration also facilitates inspection and maintenance, reducing maintenance costs and improving system availability and reliability.

Furthermore, the design of the connection terminal 30 simplifies the installation process. Through standardized interfaces and connection methods, the connection terminal 30 can be quickly installed and commissioned. In addition, due to the well-designed flow ports between connection terminals 30, the system can be more easily inspected and maintained, which helps reduce maintenance costs and improve system availability and reliability.

In one embodiment, the flow cross-sectional area of the shunt port 31 is greater than or equal to the flow cross-sectional area of the first flow port 32. The inner diameter of the shunt port 31 is D1, the inner diameter of the first flow port 32 is D2, and D1 ≥ D2. When designing the connection terminal 30, if the inner diameter D1 of the shunt port 31 is greater than or equal to the inner diameter D2 of the first flow port 32 (D1 ≥ D2), the larger inner diameter of the shunt port 31 results in relatively low resistance to fluid flow. This reduces energy loss during fluid transmission, improving transmission efficiency. Additionally, when D1 ≥ D2, the shunt port 31 can more effectively distribute fluid to the first flow ports 32, ensuring uniform fluid distribution in the system and preventing performance degradation caused by uneven flow distribution.

Furthermore, the larger inner diameter of the shunt port 31 helps reduce pressure fluctuations during fluid transmission, thereby maintaining stable system operation and preventing system failure or performance degradation caused by pressure fluctuations. Even if a part of the system becomes blocked or malfunctions, the larger inner diameter of the shunt port 31 allows fluid to continue flowing to other parts, improving system fault tolerance and ensuring overall reliability.

When the inner diameter of the shunt port 31 is greater than or equal to that of the first flow port 32, designers can more flexibly configure the fluid transmission paths, simplifying system design and reducing design costs. The larger inner diameter of the shunt port 31 also facilitates cleaning and inspection during maintenance, thereby reducing maintenance costs and improving system availability and reliability. By appropriately setting the ratio of the inner diameter of the shunt port 31 to that of the first flow port 32, material usage can be optimized, which helps reduce production costs while ensuring the required system performance. In addition, the larger inner diameter of the shunt port 31 helps reduce erosion and wear on the connection terminal 30 caused by fluid flow, thereby extending its service life and enhancing the overall cost-effectiveness of the system.

In one embodiment, the flow cross-sectional area of the shunt port 31 is greater than or equal to the flow cross-sectional area of the second flow port 33. The inner diameter of the second flow port 33 is D3, and D1 ≥ D3. When designing the connection terminal 30, if the inner diameter D1 of the shunt port 31 is greater than or equal to the inner diameter D3 of the second flow port 33 (D1 ≥ D3), the larger inner diameter of the shunt port 31 results in relatively low resistance to fluid flow. This reduces energy loss during fluid transmission, improving transmission efficiency. Additionally, when D1 ≥ D3, the cooling plate 20 can more effectively distribute fluid to the second flow ports 33, ensuring uniform fluid distribution in the system and preventing performance degradation due to uneven flow distribution.

Furthermore, the larger inner diameter of the shunt port 31 helps reduce pressure fluctuations during fluid transmission, maintaining stable system operation and preventing system failure or performance degradation due to pressure fluctuations. Even if a part of the system experiences a fault or clogging, the larger inner diameter of the shunt port 31 allows fluid to continue being transmitted to other parts, improving system fault tolerance and ensuring overall reliability.

When the inner diameter of the shunt port 31 is greater than or equal to that of the second flow port 33, designers can more flexibly configure the fluid transmission paths, simplifying system design and reducing design costs. The larger inner diameter of the shunt port 31 also facilitates cleaning and inspection during maintenance, reducing maintenance costs and improving system availability and reliability. By appropriately setting the inner diameter ratio of the shunt port 31 to the second flow port 33, material usage can be optimized, reducing production costs while ensuring system performance. The larger inner diameter of the shunt port 31 also reduces fluid-induced erosion and wear on the connection terminal 30, thereby extending its lifespan and improving overall system cost-effectiveness.

In one embodiment, the ratio of the inner diameter of the shunt port 31 to the inner diameter of the first flow port 32 is between 1 and 1.5. This configuration ensures more uniform fluid distribution during shunting, while the specified inner diameter ratio reduces resistance during the shunting process, minimizing pressure loss. This helps reduce energy consumption, improve overall system efficiency, and maintain internal pressure stability.

In one embodiment, the inner diameter of the shunt port 31 is D1, where 10 mm ≤ D1 ≤ 18 mm. Setting the inner diameter of the shunt port 31 between 10 mm and 18 mm ensures moderate resistance to fluid flow, avoiding excessive energy loss due to overly large resistance or restricted flow due to an overly small diameter. This design facilitates smooth fluid transmission and improves overall transmission efficiency. The appropriate inner diameter of the shunt port 31 ensures uniform fluid distribution during shunting, avoiding adverse effects on system performance due to excessive or insufficient flow. Additionally, this inner diameter range helps reduce pressure fluctuations during fluid transmission, maintaining system pressure stability and enhancing system reliability.

Furthermore, within this inner diameter range, even if a part of the system malfunctions or becomes blocked, the shunt port 31 can still maintain a certain level of flow transmission, thereby enhancing the system's fault tolerance. This inner diameter range also enables more efficient material usage, helping to avoid waste while ensuring the performance and reliability of the connection terminal 30. A properly designed inner diameter for the shunt port 31 further contributes to lowering production costs.

At the same time, it maintains system performance and reliability, thereby maximizing cost-effectiveness. The designed inner diameter range of the shunt port 31 enables the connection terminal 30 to be applied in various fluid transmission scenarios, such as cooling systems, lubrication systems, and fuel systems, meeting the requirements of different application contexts. The appropriate inner diameter range also enhances the system's ability to respond flexibly to flow variations, improving both adaptability and operational flexibility.

In the present application, D1 may be set to, for example, 10 mm, 12 mm, or 18 mm.

In one embodiment, the connection terminal 30 further includes a connection groove 34, and one end of the cooling plate 20 is inserted into the connection groove 34 to communicate with the shunt port 31, the first flow port 32, and the second flow port 33. The cooling plate 20 is connected to the various flow ports inside the connection terminal 30 via the connection groove 34, enabling efficient heat transfer to the cooling plate 20. This design optimizes the heat exchange process, improving heat dissipation efficiency. Additionally, the connection groove 34 allows the cooling plate 20 to be easily inserted without requiring complex installation steps or tools, reducing installation difficulty and costs while improving installation efficiency. The tight fit between the connection groove 34 and the cooling plate 20 ensures a reliable connection between the connection terminal 30 and the cooling plate 20, preventing performance degradation or failures caused by poor connections.

In one embodiment, the extension length of the connection groove 34 along the first direction is L1, where 1 mm ≤ L1 ≤ 5 mm. Setting L1 within this range ensures compatibility between the connection groove 34 and the cooling plate 20 or other connection components. This precise dimensional control prevents looseness or excessive tightness during installation, thereby ensuring connection stability and reliability. The small L1 range reduces installation errors, making it easier for installers to correctly insert the cooling plate 20 or other components into the connection groove 34 and thereby improving installation accuracy.

Additionally, the appropriate length of the connection groove 34 optimizes the thermal conduction path. By ensuring tight contact between the cooling plate 20 and the connection groove 34, heat can be more effectively transferred from the connection terminal 30 to the cooling plate 20, improving heat dissipation efficiency. A shorter connection groove 34 reduces thermal resistance, minimizing heat loss during transmission and enhancing overall system heat dissipation performance. The shorter connection groove 34 also enhances the structural strength of the connection terminal 30, making it more resistant to deformation or damage under stress. Furthermore, a shorter connection groove 34 helps resist external impacts, reducing the impact of external forces on the connection terminal 30 and protecting the integrity of the connection components and the entire system.

In the present application, L1 may be set to, for example, 1 mm, 3 mm, or 5 mm.

In one embodiment, the connection terminal 30 further includes a partition structure 35 disposed within the connection groove 34. The partition structure 35 extends along a second direction to isolate the second flow port 33 from the first flow port 32 and the shunt port 31, with the first direction being perpendicular to the second direction. This configuration enables the isolation of the second flow port 33 from the first flow port 32 and the shunt port 31, facilitating coolant communication between multiple cooling plates 20 while preventing cross-flow between the second flow port 33, the first flow port 32, and the shunt port 31, ensuring normal operation of the device.

In one embodiment, the extension length of the partition structure 35 along the second direction is L2, where 10 mm ≤ L2 ≤ 26 mm.

In a second aspect, an embodiment of the present application provides a battery pack including the above-described battery module.

By applying the technical solution of the present application, the connection terminal 30 on the cooling plate 20 near the middle position is provided with a shunt port 31. This configuration allows a portion of the coolant to be diverted externally when it flows from the connection terminal 30 on the cooling plate 20 near the upstream end to the shunt port 31, thereby reducing the coolant flow rate in the cooling plates 20 near the downstream end. This ensures that the coolant flow rate in the cooling plates near the downstream end is the same as that in the cooling plates near the upstream end, achieving uniform coolant flow distribution among the branches and avoiding excessive temperature differences among the battery cells.

## Claims

1. A battery module, comprising:
a plurality of battery cell groups spaced apart along a first direction;
a plurality of cooling plates spaced apart along the first direction, each cooling plate disposed between two adjacent battery cell groups; and
a plurality of connection terminals disposed at one end of the cooling plates, the connection terminals corresponding one-to-one with the cooling plates, wherein adjacent cooling plates are interconnected via the connection terminals, and the connection terminal on the cooling plate furthest from a downstream end is provided with a shunt port for discharging coolant from the cooling plate.

2. The battery module as recited in claim 1, wherein each of the connection terminals further comprises a first flow port and a second flow port, wherein the first flow ports of adjacent connection terminals are interconnected, and the second flow ports of adjacent connection terminals are interconnected, the shunt port is in communication with the first flow port, and the second flow port is isolated from both the first flow port and the shunt port.

3. The battery module as recited in claim 2, wherein a flow cross-sectional area of the shunt port is greater than or equal to a flow cross-sectional area of the first flow port.

4. The battery module as recited in claim 3, wherein a flow cross-sectional area of the shunt port is greater than or equal to a flow cross-sectional area of the second flow port.

5. The battery module as recited in claim 3, wherein a ratio of an inner diameter of the shunt port to an inner diameter of the first flow port is from 1 to 1.5.

6. The battery module as recited in claim 3, wherein an inner diameter of the shunt port is D1, and 10 mm ≤ D1 ≤ 18 mm.

7. The battery module as recited in any one of claims 2 to 6, wherein the connection terminal further comprises a connection groove, and one end of the cooling plate is inserted into the connection groove to communicate with the shunt port, the first flow port, and the second flow port.

8. The battery module as recited in any one of claims 1 to 7, wherein an extension length of the connection groove along the first direction is L1, and 1 mm ≤ L1 ≤ 5 mm.

9. The battery module as recited in any one of claims 1 to 7, wherein the connection terminal further comprises a partition structure disposed within the connection groove, the partition structure extending along a second direction to isolate the second flow port from the first flow port and the shunt port, wherein the first direction is perpendicular to the second direction.

10. The battery module as recited in any one of claims 1 to 7, wherein an extension length of the partition structure along the second direction is L2, and 10 mm ≤ L2 ≤ 26 mm.

11. The battery module as recited in any one of claims 1 to 10, wherein the cooling plate is made of aluminum or copper.

12. A battery pack, comprising the battery module as recited in any one of claims 1 to 11.
